# EUROPEAN PATENT APPLICATION

(11) **EP 3 550 788 A1**
(43) Date of publication of application: **09.10.2019**
(21) Application number: 17890593.1
(22) Date of filing: 26.12.2017
(51) Int. Cl.: H04L 29/06, H04L 29/08, G06F 17/30

(54) **DATA ACQUISITION METHOD AND DEVICE**

(30) Priority: 09.01.2017 CN 201710013608
(71) Applicant: Alibaba Group Holding Limited, Grand Cayman (KY)
(72) Inventor: WANG, Tian, Hangzhou Zhejiang 311121 (CN)
(74) Representative: Branderhorst, Matthijs Pieter Arie
(86) International application number: PCT/CN2017/118452
(87) International publication number: WO 2018/126938

(57) **Abstract**

The present disclosure provides a data acquisition method and device applicable to a mobile application. The mobile application comprises a web page and a page container configured to load the web page, and the page container is implemented by a Native programming language. The method comprises: when detecting that the web page receives a data acquisition request, sending, via the page container, a data request to a server which is configured to provide the data across domains; and receiving data from the server via the page container, and transmit the data to the web page to load the data. The present disclosure requests data from the server across domains via a client interface provided by a Native page container. Since RPC data requests transmitted to the server by a Native page container do not involve cross-domain operations, the method is more applicable, and the development process of the strategy is simple and has good compatibility.

## Description

### Technical Field

The present disclosure relates to network technologies, and in particular, to a data acquisition method and device.

### Background

Mobile devices and mobile applications become increasingly popular. People use mobile applications installed on mobile devices to browse information and search for data every day. There are more and more mobile devices, mobile applications, as well as their functions. One of the functions is to browse contents on web pages via mobile applications. Displaying web pages sometimes involves requesting data across domains. For example, website A and website B belong to different domains, and the display of a web page of website A requires some data stored in a server of website B. Therefore, to obtain the data for displaying the web page, it requires cross-domain access to the sever of website B. In the related art, there are many methods for obtaining data across domains, but all of the current methods have some drawbacks, making cross-domain interactions less desirable. For example, JSONP (JavaScript Object Notation with Padding) may be used, but JSONP only supports GET requests and does not support other types of HTTP (Hypertext Transfer Protocol) requests such as POST, resulting in a narrow application range and security risks. In another example, the method of modifying cross-domain files may be used, but this method is only supported in a very small number of browsers and is not flexible.

### Summary

In view of the above, the present disclosure provides a data acquisition method and device for cross-domain data acquisition, which is simple and widely applicable.

In one example, the present disclosure is implemented through the following technical solution:
according to a first aspect, a data acquisition method is provided. The method is applicable on a mobile application, the mobile application includes a web page and a page container configured to load the web page, and the page container is implemented by a Native programming language. The method includes:
when detecting that the web page receives a data acquisition request, send, via the page container, a data request to a server which provides the data across domains; and
receiving data from the server via the page container, and transmitting the data to the web page to load the data.

According to a second aspect, a data acquisition system is provided. The system includes a server and a mobile application installed on a mobile device, the mobile application includes a web page and a page container configured to load the web page, the page container is implemented by a Native programming language, and the server is configured to provide, across domains, data requested for displaying on the web page.

The mobile application is configured to, when detecting that the web page receives a data acquisition request, send, via the page container, a data request to a server which provides the data across domains.

The server is configured to send the data to the page container of the mobile application and for the page container to transmit the data to the web page to load the data.

According to a third aspect, a data acquisition device is provided. The device is applicable on a mobile application, the mobile application includes a web page and a page container configured to load the web page, and the page container is implemented by a Native programming language; the web page includes a data request module, and the page container includes a call processing module.

The data request module is configured to, when detecting that the web page receives a data acquisition request, send, via the call processing module of the page container, a data request to a server which provides the data across domains.

The call processing module is configured to, upon receiving data from the server, transmit the data to the data request module.

The data acquisition method and device according to the present disclosure request data across domains from the server via a client interface provided by a Native page container. Since RPC data requests transmitted to the server by a Native page container do not involve cross-domain operations, the method is not limited as the relevant cross-domain methods, and thus is more applicable. Moreover, the implementation of the method is simple.

### Brief Description of the Drawings

FIG. 1 is a schematic diagram of system architecture of a data acquisition method according to some embodiments of the present disclosure;
FIG. 2 is a flow chart of the data acquisition method according to some embodiments of the present disclosure;
FIG. 3 is a schematic structural diagram of a data acquisition device according to some embodiments of the present disclosure.

### Detailed Description

To enable one of ordinary skill in the art to better understand the technical solutions of the present application, the technical solutions in the embodiments of the present application will be described below with reference to the accompanying drawings in the embodiments of the present application. It is obvious that the described embodiments are merely some, but not all, embodiments of the present application. On the basis of the embodiments of the present application, all other embodiments obtainable by one of ordinary skill in the art without creative effort shall fall within the scope of the present application.

As mobile devices become popular, there are more and more mobile applications, and the mobile applications have more and more functions. There are three forms of mobile applications: Native APPs, Web APPs, and Hybrid APPs. A Hybrid APP means an APP that combines Web and Native Apps and incorporates respective advantages of Native and Web APPs.

A Hybrid APP may use a native programming language (i.e., Native) to implement an UI (User Interface) container having web page browsing functions, and all contents visible to users are web pages developed using web page languages, such as HTML (Hyper Text Mark-up Language), JavaScript (Java script), CSS (Cascading Style Sheet), etc. Therefore, a Hybrid APP in the present disclosure may include two parts with one part being a web page and the other part being a page container configured to load the web page, and the page container is implemented by a Native programming language.

When a Hybrid APP is used, a user may encounter a scenario of requesting data across domains. For example, the user opens a web page http://www.a.com/ in a mobile application installed on the user's mobile device, and the page belongs to website A. Assuming a situation in which the user triggers an operation on this page, such as inputting a keyword and clicking "Search," the web page will monitor the this triggered operation, and the search result data corresponding to the keyword will be obtained and returned to be displayed on the page. In one example, the data may be provided across domains by a server in another domain. For example, the server is a server of http://www.b.com/ that belongs to website B, and website A and website B belong to different domains. Then the mobile application needs to obtain the data required for the page display across domains, i.e., a cross-domain data request is needed.

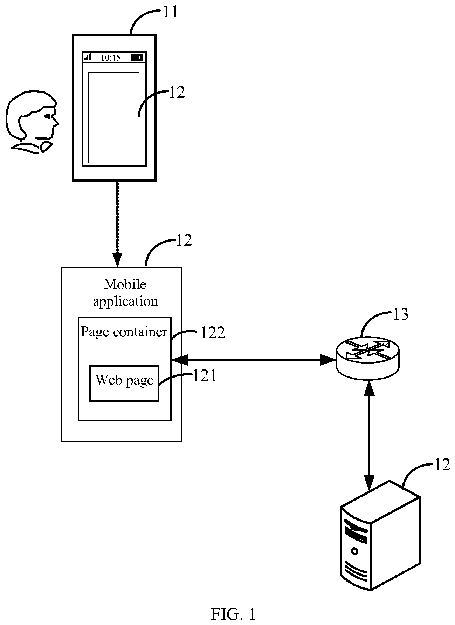

The present disclosure provides a data acquisition method describing how a mobile application obtains data provided by a server across domains. FIG. 1 illustrates a system environment to which the method is applied and describes a process of a cross-domain access with reference to the environment. As shown in FIG. 1, the system may include a mobile device 11, a server 12, and a gateway 13.

In some embodiments, the mobile device may be a smart phone, a PDA (Personal Digital Assistant), a cellular phone, a camera phone, a media player, a navigation device, an email receiving and sending device, a game console, a tablet computer, a wearable device, or a combination of any devices in these devices. In the example in FIG. 1, the mobile device may be a smart phone 11 of the user.

As shown in FIG. 1, the mobile application 12 installed on the smart phone 11 may include a web page 121 and a page container 122. The web page 121 may be a page developed by a web page programming language, while the page container 122 may be implemented by a Native programming language. For example, a WebView component or another browser kernel component may be embedded, and a page may be loaded into this component, which is equivalent to an embedded browser.

When the user opens the web page 121 in the mobile application, and executes a data acquisition trigger operation on the page. For example, by clicking a button on the page, the user can trigger the mobile application to obtain, across-domains, data provided by the server 12 for display on the page. In some embodiments, the system of FIG. 1 may further include the gateway 13. The gateway 13 may forward information between the mobile application and the server 12 in the data acquisition method.

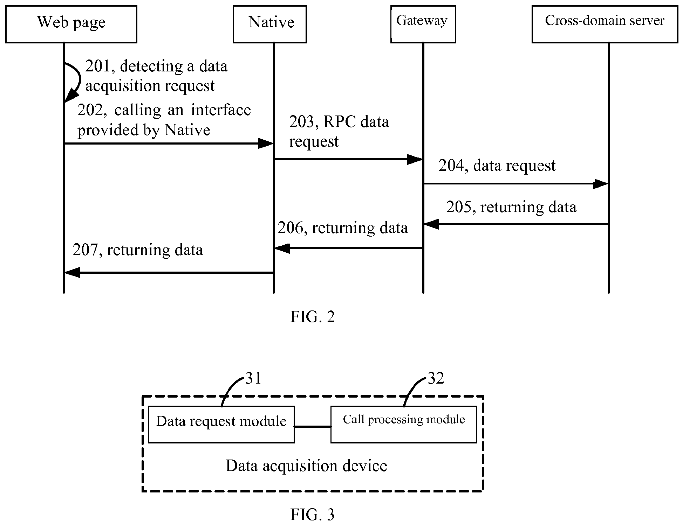

JavaScript has an important security restriction, i.e., the same-origin policy. JavaScript can only access contents in the same domain as the document that includes the contents. In a nutshell, JavaScript code in domain A is generally prohibited from accessing domain B across domains. In this embodiment, a data acquisition method is provided to implement the cross-domain data access. FIG. 2 illustrates a flow that the mobile application in FIG. 1 obtains data from the server across domains. As shown in FIG. 2, the flow may include the following steps:
Step 201, the mobile application detects that the web page receives a data acquisition request.

For example, during developing the web page code portion of the mobile application, the page may be set to include a function to detect whether the page receives a data acquisition request. When it is detected that the user executes a data acquisition trigger operation on the web page, the data needs to be obtained. In one example, the data acquisition trigger operation may be that the user clicks a button on the page, or inputs a keyword and clicks "Search," and the mobile application needs to obtain search result data for display on the page.

Step 202, the web page of the mobile application may call a client interface encapsulated by the Native page container, and the client interface calls an RPC interface of the Native page container.

In some embodiments, the page container (to be referred to as Native page container in subsequent description) in the mobile application may encapsulate a client interface which is configured to call an RPC (Remote Procedure Call Protocol) interface. When the web page in the step 201 detects a data acquisition request, the client interface may be called to trigger the execution of the step 203.

In addition, when the web page calls the client interface, certain parameters required for requesting the data may be transferred to the Native page container. For example, the parameters may include interface address information and request parameter information. The interface address information may be information pre-established with the server, and may be used to indicate an address of the server where the data is located and a name of a call interface in the server corresponding to the data. For example, the information transferred from the web page to the Native page container may include https://www.alipay.com/a.json?data=123. Here, https://www.alipay.com/a.json is the interface address information, https://www.alipay.com is the server address, a.json is the name of the call interface corresponding to the data, and the server can retrieve the corresponding data from a database that stores the data according to the interface name. The name of the call interface may be an interface declaration made, before receiving the cross-domain data request, by the server for an external call of the corresponding data. "?data=123" is the request parameter information for indicating which data to be retrieved. According to this parameter, the server may know which data is requested and then issue the data as requested to the client. For example, assuming that the requested data is the first five pieces of data in a data set corresponding to the interface address information, the request parameter information may include "5" to indicate that the first five pieces of data are requested.

Step 203, the Native page container sends the data request to the gateway 13.

When the web page calls the client interface provided by the Native page container, the Native page container is triggered to send an RPC data request to the server 12 to request cross-domain data provided by the server 12. In this step, the Native page container may send the RPC data request to the gateway 13 through the RPC remote procedure call, and services of the server 12 may be called in the same way as local services. In some embodiments, the implementations may include XML-RPC, JSON-RPC, etc. The RPC data request is used for requesting cross-domain data provided by the server 12, and the cross-domain data is the data to be displayed on the web page of the mobile application. In addition, the RPC data request may include the interface address information and request parameter information.

Step 204, the gateway 13 forwards the data request to the server 12.

In some embodiments, the gateway 13 may pre-call and release the interface and configuration declared by the server 12, so that the gateway 13 may record a required forwarding path when an interface call is received. After the gateway 13 receives the RPC data request from the Native page container, the gateway 13 may route and forward the request to the server 12 according to the interface address information and request parameter information in the request. For example, the gateway 13 may record a forwarding path corresponding to an address of a server, and when the server address for www.alipay.com is received, finds the corresponding path for forwarding.

Step 205, the server 12 returns the cross-domain data to the gateway 13.

In some embodiments, after the server 12 receives the data request forwarded by the gateway 13, the server 12 may obtain corresponding data according to the call interface name in the request, complete the process, and return the data to the gateway 13, to cause the gateway 13 to send to the mobile application in the mobile device 11.

Step 206, the gateway 13 returns the data to the Native page container.

Step 207, the Native page container transmits the cross-domain data to the web page for loading and displaying the data on the web page.

The data acquisition method in this example uses the feature that RPC data requests transmitted to the server by a Native page container do not involve cross-domain operations. A Native page container encapsulates a client interface for the web page, and the client interface calls the RPC interface of the Native page container. When the web page receives a data acquisition trigger, the client interface is called to correspondingly trigger the Native page container to send an RPC data request to the server to acquire the data in a different domain. Since RPC data requests transmitted to the server by the Native page container do not involve cross-domain operations, this method is more applicable by requesting data across domains from a server via a client interface provided by the Native page container. Moreover, the development process of this strategy is simple and has good compatibility. After the server releases a call interface, the server can be accessed by mobile terminal pages in multiple domains, and each domain may request data across domains according to the flow illustrated in FIG. 2.

In some embodiments, the mobile device where the mobile application for executing the data acquisition method is located may include one or more of the following components: a processing component, a memory, a power supply component, a multimedia component, an audio component, an input/output (I/O) interface, a sensor component, and a communication component. The processing component typically controls overall operations of the mobile device, such as operations associated with display, phone call, data communication, camera operations, and recording operations. The processing component may comprise one or more processors to execute instructions to complete all or some steps of the above-described method. In addition, the processing component may comprise one or more modules for interactions between the processing component and other components. For example, the processing component may comprise a multimedia module for interactions between the multimedia component and the processing component.

The memory is configured to store various types of data to support operations on the mobile device. Examples of the data comprise instructions of any application or method that are operated on the device, contact data, phone book data, messages, images, videos, etc. When an instruction in the memory is executed by a processor, the data acquisition method in the present disclosure may be implemented. The memory may be implemented by any type of volatile or non-volatile storage devices or a combination of these storage devices, such as Static Random Access Memories (SRAMs), Electrically Erasable Programmable Read-Only Memories (EEPROMs), Erasable Programmable Read-Only Memories (EPROMs), Programmable Read-Only Memories (PROMs), Read-Only Memories (ROMs), flash memories, magnetic disks, or optical discs.

In some embodiments, the mobile device may be implemented by one or more Application Specific Integrated Circuits (ASIC), Digital Signal Processors (DSP), Digital Signal Processor Devices (DSPD), Programmable Logic Devices (PLD), Field Programmable Gate Arrays (FPGA), controllers, microcontrollers, microprocessors, or other electronic elements for implementing the above-described method.

In some embodiments, a non-temporary computer readable storage medium including instructions, such as a memory including instructions, is further provided. The above-described instructions may be executed by a processor of the mobile device to complete the data acquisition method of the present disclosure. For example, the non-temporary computer readable storage medium may be ROM, Random Access Memory (RAM), CD-ROM, magnetic tape, floppy disk, optical data storage devices, etc.

To implement the above-described data acquisition method, a data acquisition device is further provided in the present disclosure. The device is applicable on a mobile application, the mobile application may include a web page and a page container configured to load the web page, and the page container is implemented by a Native programming language; the web page may include a data request module, and the page container may include a call processing module.

As shown in FIG. 3, the data request module 31 is configured to, when detecting that the web page receives a data acquisition request, send, via a call processing module of the page container, a data request to a server which provides data across domains.

The call processing module 32 is configured to, upon receiving data from the server, transmit the data to the data request module.

In some embodiments, the data request may include interface address information and request parameter information, and the interface address information is used to indicate an address of the server where the data is located and a name of a call interface in the server corresponding to the data.

In some embodiments, the call processing module 32 is configured to encapsulate a client interface for the web page, and the client interface is configured to call an RPC interface of the page container.

The data request module 31 is configured to call the client interface to trigger the call processing module to send an RPC data request to the server via the RPC interface.

The device or modules elaborated in the above embodiments may be implemented by a computing device. For convenience of description, the above-described device is divided into various units according to functions for description. Functions of the modules may be implemented in one or multiple pieces of software and/or hardware when the present disclosure is implemented.

The above-described is only some embodiments of the present disclosure, which are not used to limit the present disclosure. Any modification, equivalent substitution, or improvement made within the spirit and principle of the present disclosure shall be encompassed by the present disclosure.

## Claims

1. A data acquisition method, wherein the method is applicable on a mobile application, the mobile application comprising a web page and a page container configured to load the web page, and the page container being implemented by a Native programming language, the method comprising:
when detecting that the web page receives a data acquisition request, sending, via the page container, a data request to a server, which is configured to provide the data across domains; and
receiving the data from the server via the page container, and transmitting the data to the web page to load the data.

2. The method according to claim 1, wherein the data request includes interface address information and request parameter information, and the interface address information indicates an address of the server where the data is located and a name of a call interface in the server corresponding to the data.

3. The method according to claim 1, wherein the detecting that the web page receives a data acquisition request comprises:
detecting that a user executes a data acquisition trigger operation on the web page.

4. The method according to claim 1, wherein sending the data request comprises:
calling a client interface encapsulated by the page container, wherein the client interface is configured to call an RPC (Remote Procedure Call) interface of the page container; and
sending an RPC data request to the server via the RPC interface of the page container.

5. A data acquisition system, comprising a server and a mobile application installed on a mobile device, wherein:
the mobile application comprises a web page and a page container configured to load the web page;
the page container is implemented by a Native programming language;
the server is configured to provide, across domains, data requested for displaying the web page;
the mobile application is configured to, when detecting that the web page receives a data acquisition request, send, via the page container, a data request to the server; and
the server is further configured to send the data to the page container of the mobile application and for the page container to transmit the data to the web page to load the data.

6. The system according to claim 5, further comprising a gateway configured to:
receive the data request from the mobile device via an RPC interface of the page container;
send the data request to the server according to interface address information and request parameter information included in the data request; and
send the data from the server to the page container.

7. The system according to claim 5, wherein
when detecting that the web page receives a data acquisition request, the mobile application is configured to, by the web page, call a client interface encapsulated by the page container for the web page, and the client interface is configured to call an RPC interface of the page container to send an RPC data request to the server via the RPC interface.

8. A data acquisition device, applicable on a mobile application, wherein:
the mobile application comprises a web page and a page container configured to load the web page, the page container being implemented by a Native programming language, the web page comprising a data request module, and the page container comprising a call processing module;
the data request module is configured to, when detecting that the web page receives a data acquisition request, send, via the call processing module of the page container, a data request to a server which is configured to provide the data across domains; and
the call processing module is configured to, upon receiving data from the server, transmit the data to the data request module.

9. The device according to claim 8, wherein the data request includes interface address information and request parameter information, the interface address information being configured to indicate an address of the server where the data is located and a name of the call interface in the server corresponding to the data.

10. The device according to claim 8, wherein
the call processing module is configured to encapsulate a client interface for the web page, wherein the client interface is configured to call the RPC interface of the page container; and
the data request module is configured to call the client interface to trigger the call processing module to send an RPC data request to the server via the RPC interface.
